# EUROPEAN PATENT APPLICATION

(11) **EP 1 462 776 A1**
(43) Date of publication of application: **29.09.2004**
(21) Application number: 03425184.3
(22) Date of filing: 24.03.2003
(51) Int. Cl.: G01F 23/74

(54) **Device for closing barrels**

(71) Applicant: Vintec S.r.l, 20154 Milano (IT); RO-SA MICROMECCANICA S.a.S., I-30027 San Donà di Piave, Venezia (IT)
(72) Inventor: Casini Roberto, 20145 Milano (IT); Sandrin Giannino, 33080 Porcia (Pordenone) (IT)
(74) Representative: Petruzziello, Aldo

(57) **Abstract**

A device for closing wooden casks suitable for preserving wine, such as barriques and barrels of various capacities (is disclosed). The device comprises one or more sensors for detecting physical quantities such as the temperature and/or the level of the wine inside the wooden casks. Said sensors are integrated inside the bung body, which consists of a rigid structure covered with an elastomeric material which ensures a tight sealing between the bung and the mouth of the wooden cask. The closing system of the bung is suitable to be adapted to any differences in diameter between the holes of the wooden casks.

## Description

The present invention refers to a closing device or bung for barrels, particularly wooden barrels, such as barriques or other containers or casks of different capacities.

Barriques, wooden casks suitable for containing wine during partial or complete fermentation and/or subsequent refining, are currently closed with a frusto conical cork, which is forcibly inserted in the wine input hole, so as to create a very tight seal against gas and liquids.

The materials most frequently used at present for the production of bungs for barriques are:
- Elastomers, typically silicone rubber with a high degree of purity, or other rubbers complying with international standards which regulate use in contact with food, in the case in point, alcoholic beverages.
- Wood, which is wrapped in a piece of cloth and forced into the input hole.
- Rigid plastic materials which form the frame of the bung, coated on the outside with elastomeric materials which ensure a tight seal.

In recent years barrique bungs are used, which are normally made of silicone rubber and are provided with a pressure relief valve for releasing the gases, mainly CO₂, which are formed during some stages of wine fermentation and would lead to a barrique deformation or to discharge of the bung from its seat if the gases have no possibility of being released. The use of said type of bung is continuously increasing, as it allows the partial fermentation of wine in barriques, an increasingly fashionable technique. The valve can be integrated into the bung according to various constructional methods.

Generally, once the barriques have been filled with wine, this wine undergoes physicochemical processes which hare outlined below:
- Yielding by the wood from which the barrique is made of aromatic components which modify the organoleptic characteristics and chemical composition of the wine.
   This yielding can be more or less marked according to the qualities of the woods used, to their origin, to the type of toasting and to the degree of use of said barrique. The more the barrique has been used over time, the lower is its ability to yield substances to the wine.
- Absorption, by the wood, of a certain percentage of wine. Absorption also is depending on the type of wood and on the contact time. Said wine absorption involves a drop in the initial filling level.
- Micro-oxygenation related to the porosity of the woods from which the barrique is produced, which increases if the woods are not kept moist. Said oxygen exchange promotes wine ageing and refining thereof. However, if the wine level inside the barrique is too low, the large amount of oxygen present could lead to an excessive ageing of the wine or to the growing of aerobic bacteria.
- Wine evaporation due to the woods micro porosity. This phenomenon too increases the level drop and the consequent creation of a pressure lower than atmospheric pressure in the upper space of the barrique.
- Formation of gas, in particular CO₂, if the wine partially ferments in the barrique. Said gas formation generates an overpressure in the upper space of the barrique which must be evacuated to avoid possible deformations of the barrique staves or ejection of the bung.

It is therefore obvious from the above that barriques must be topped up periodically to minimize the upper space occupied by air.

The time interval between these topping up operations varies according to the above-mentioned parameters, but can be estimated to be between one and two weeks in the case of new barriques and decreases with time.

Once a week, therefore, an operator connects a tube to a pump which draws wine from a tank containing a wine of the same type as that contained in the barrique and performs the topping up operation. Very often said operations are carried out in poorly lighted rooms and at temperatures around 15°C, obliging the operator to operate in hazardous conditions if, as often happens, the barriques are stacked one on top of another on at least two or three levels.

The operator removes the bung and tops up the barrique by eye. When the wine reaches the mouth of the barrique he turns off the pump, verifies that wine does not overflowed from the barrique and goes on to the next barrique. In fact overflowed wine, if any, must be removed immediately, otherwise there is a risk of mould and bacteria growing around the hole of the barrique.

The following drawbacks are related to the topping up operation:
- High cost due to the entirely manual nature of the operation.
- Risk of wine contamination if any residue of wine is not removed from the outside of the barrique, giving rise to mould and bacteria growing.
- Risk of oxidation of the wine if the drop in the level of the wine in some barriques is markedly greater than that in the remaining barriques.
- Risk of formation of aerobic bacteria due to the presence of oxygen inside the barrique.
- Different ageing of the wine from one barrique to another due to the different levels of absorption of the wine. The longer the wine stays in the barriques, the more evident this phenomenon becomes.
- Lack of information regarding the condition of the wine in the barriques. In fact, whilst in stainless steel vats the wine is maintained at a controlled temperature, the ageing conditions of the wine in the barriques cannot be controlled.
- Difficulty of operations related to the fact of operating in poor lightened and low temperature rooms and that often the barriques are stacked one on top of the other and topping up is done therefore some metres above the ground.

From this description it is evident that the operations of topping up the barriques are not without drawbacks.

An object of the present invention is to overcome at least a part of the drawbacks of the prior art, providing for a device for closing barrels that supplies the operator with the necessary information for a correct and timely topping up of the barrels.

Another object of the present invention is to provide a system for closing barrels that is practical, versatile and the same time ensuring more efficient topping up of the barrels decreasing the number of needed topping up operations, ensuring a greater constancy of the quality of the wine, minimising the risk of growing of aerobic bacteria and increasing the operators safety lever due to the reduced number of operations.

These objects are achieved in accordance with the invention with the closing device for barrels described in appended independent claim 1.

Advantageous embodiments of the invention are apparent from the dependent claims.

The device for closing barrels according to the invention comprises a body suitable to be inserted in the hole of a barrel and a head accessible from the outside of the barrel hole.

The peculiar characteristic of the sealing device is represent by the fact that it further comprises:
- detector means suitable to detect physical quantities relating to the wine contained in the barrel, and
- signalling means, operatively connected to said detector means, suitable to provide the user with a signal concerning said physical quantities measured by the detector means.

The detector means advantageously comprise a level sensor suitable to detect the wine level inside the barrel.

The advantages of the closing device for barrels according to the invention are obvious. In fact, with said closing device it is possible to carry out the operation of topping up the barrels only when the level sensor indicates that the wine level is below a pre-set minimum threshold.

This allows, on the one hand, to reduce the number of topping up operations only to the barriques requiring them and, on the other hand, to make topping up more timely.

Further characteristics of the invention will be made clearer by the detailed description that follows, referring to a purely exemplary and therefore non-limiting embodiment thereof, illustrated in the appended drawings, in which:
Figure 1 is a side view illustrating the closing device for barrels according to the invention;
Figure 2 is a perspective view illustrating the closing device according to the invention in an upturned position;
Figure 3 is an enlarged axial sectional perspective view of the closing device of Figure 1, and
Figure 4 is a cross sectional view taken along the plane of section IV-IV of Figure 1.

The device for closing barrels according to the invention, denoted as a whole with reference numeral 100, is described with the aid of the figures.

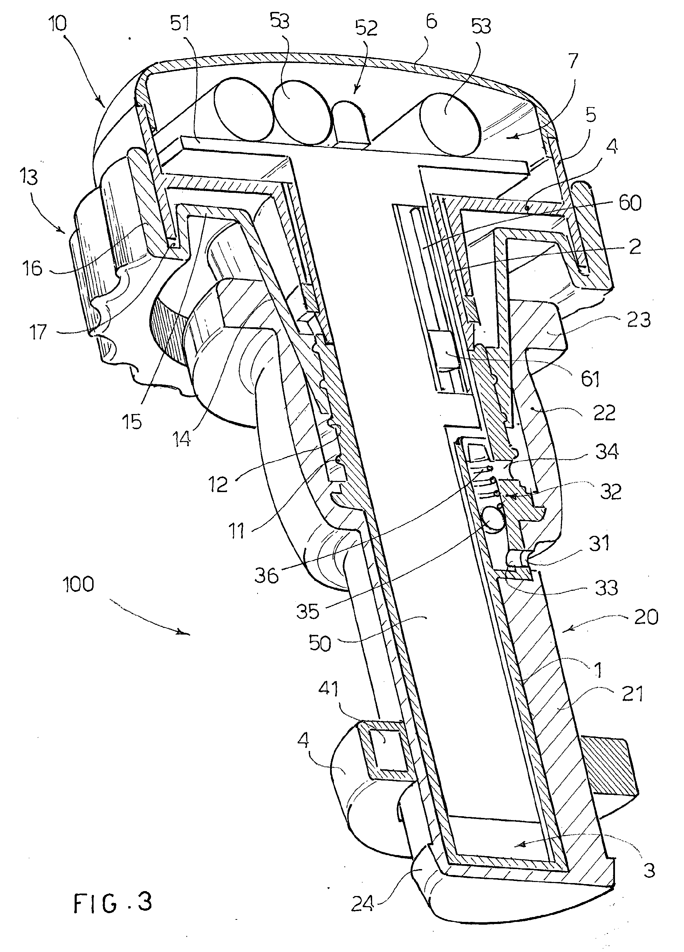

As shown in Figure 3, the closing device 100 comprises a main body 1 with a substantially cylindrical shape. The body 1 has an upper portion 2 with a frusto conical shape.

The body 1 is hollow on the inside and has an axial chamber 3 which also extends into its upper part 2. The body 1 is closed at the bottom, whilst its upper part 2 is open at the top.

The upper part 2 of the body 1 has a disc-shaped flange 4 at the top which protrudes radially outward therefrom and is disposed on a plane at right angles with respect to the axis of the body 1. The disc-shaped flange 4 has a cylindrical sidewall 5 which extends above and below the disc-shaped flange 4.

A cover 6 of transparent material is removably applied on the upper edge of the sidewall 5. In this manner the disc-shaped flange 4, the sidewall 5 and the cover 6 define the head 10 of the closing device 1. A hollow housing 7 delimited by the sidewall 5 is defined inside the head 10, between the disc-shaped flange 4 and the cover 6.

Beneath the upper portion 2, the body 1 has an outer thread 11 able to engage with the inner thread 12 of a threaded ring nut 13. The threaded ring nut 13 has a frusto conical body 14 with an upwardly increasing diameter.

An operating crown 16 which extends outward with respect to the sidewall 5 of the head 10 is connected to the frusto conical body 14 of the ring nut 13 by means of a flange 15. An annular seat 17, having a U-shaped axial section, is defined between the flange 15 of the ring nut 13 and the operating crown 16, the lower edge of the sidewall 5 of the head 10 being positioned inside the annular seat 17.

A covering sheath 20 of elastomeric material with good properties as a gas barrier is applied to the main body 1. The covering sheath 20 has a cylindrical lower part 21 and a barrel-shaped upper part 22, whose diameter is larger than that of the lower part. The upper part 22 of the covering sheath ends in an annular shoulder 23 which protrudes radially outward therefrom. The lower part 21 of the covering sheath, on the other hand, ends in a collar 24 which protrudes radially outward therefrom.

At least a part of the upper part 22 of the covering sheath is disposed on the frusto conical body 14 of the threaded ring nut. In this manner, by screwing the ring nut 13 onto the body 1, lowering of the frusto conical body 14 of the ring nut on the body 1 and thus widening of the upper part 22 of the covering sheath is caused.

Thus, for tight closure of a barrique, the closing device 1 is inserted into the hole of the barrique until the shoulder 23 of the covering sheath abuts against the edge of the hole. Subsequently, the ring nut 13 is turned so as to allow widening of the upper part 22 of the covering sheath which exerts a pressure on the walls of the hole of the barrique, so as to allow anchoring of the closing device 1 to the barrique and a tight seal of the closing device against gas in the wood-bung interface. Said blocking system also allows the closing device 100 to be adapted to barriques with a hole diameter that varies from one to the other by about 10 mm.

A channel 30, substantially C-shaped in axial section and having an input 33 and an output 34, is formed in the body 1. The input 33 of the channel communicates with a radial through hole 31 formed in the covering sheath 20 beneath the upper part 22 of the covering sheath, whilst the output 34 of the channel opens behind the upper part 22 of the covering sheath.

Disposed inside the channel 30 there is a one-way pressure relief valve 32, suitable to permit discharge to the outside of the gases contained inside the barrel. The one-way pressure relief valve 32 comprises a ball-closing element 35 urged by a spring 36.

Around the lower cylindrical part 21 of the covering sheath there is disposed a ring of plastic material 40 containing on its inside a magnetic sensor 41. The ring 40 can slide along the axis of the central body on the lower cylindrical part 21 of the covering sheath between the collar 24 and the upper part 22 of the covering sheath. The ring 40 is designed so that it floats when in contact with the wine, thus indicating the level reached by the wine inside said barrique.

In the axial chamber 3 defined inside the body 1 and in the upper part 2 thereof a printed circuit board 50 is disposed. The printed circuit board 50 is connected at its upper end to a printed circuits base plate 51. The base plate 51 is at right angles to the circuit board 50 and is disposed in the seat 7 of the head 10 of the closing device.

In the circuit board 50 a control logic is integrated, which is suitable to detect the signal sent by the magnetic sensor 41 which indicates the level of the wine contained in the barrique.

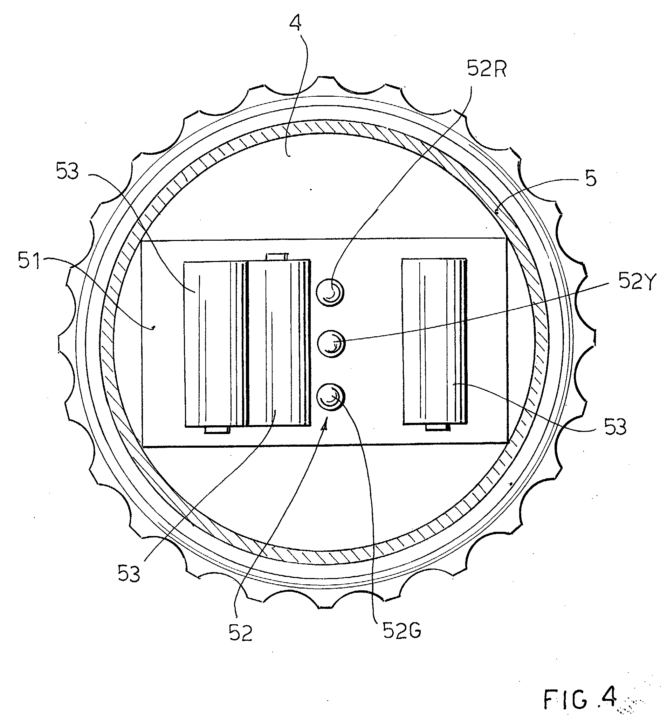

A group of light emitting diodes (LED) 52 providing various signals and a group of AA batteries 53 supplying the circuitry of the closing device 100 are mounted on the base plate 51. As better shown in Figure 4, three LEDs which emit light of different colours - i.e. a red LED 52R, a yellow LED 52Y and a green LED 52G - are preferably provided. LEDs 52 can have a fixed or flashing lighting.

Lighting of the different LEDs 52 is selectively controlled by the control logic of the circuit board 50 according to the signal detected by the magnetic sensor 41 indicating the wine level in the barrique.

A minimum threshold level is set in the closing device 100, based on the fact that, when the wine inside the barrel is below said minimum threshold level, topping up is necessary. Accordingly:
- lighting of the green diode 52G indicates that the level of the wine contained inside the barrel is above the minimum threshold level and it is not necessary to perform topping up,
- lighting of the red diode 52R indicates that the level of the wine inside the barrel has fallen below the minimum threshold level and topping up of the barrel is therefore necessary.

Lastly, the yellow diode 42Y (52Y; Translator's note) indicates that the batteries 53 are almost down and should be replaced therefore.

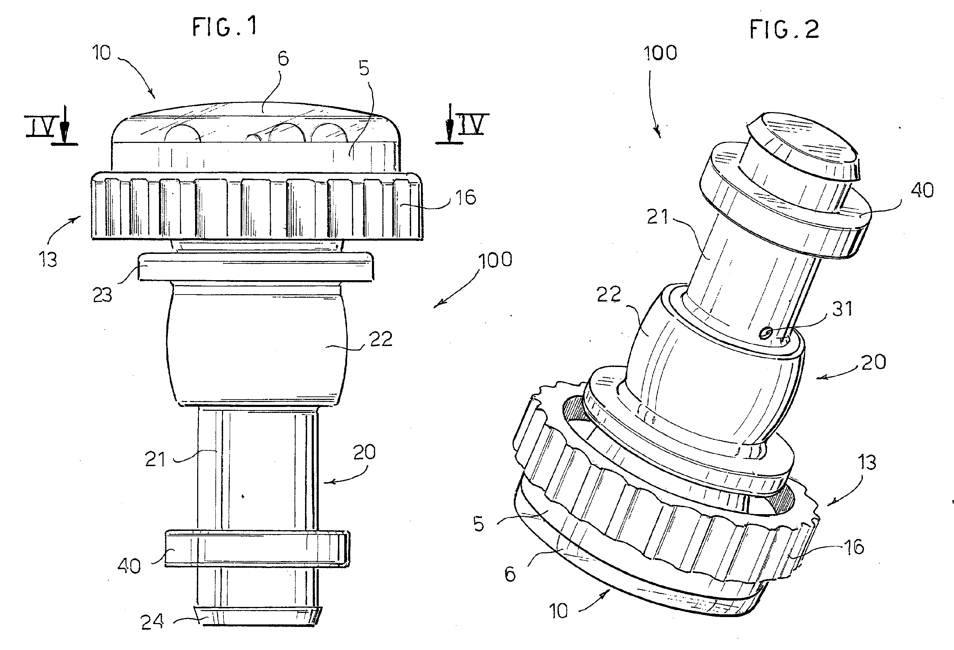

A switch 60 interposed between the group of batteries 53 and the circuitry of the closing device 100 is integrated into the circuit board 50. The switch 60 is a gravity switch and is controlled by sliding switching means 61 which is moved from the ON position to the OFF position by the force of gravity. When the bung is in the closing position (Figures 1 and 3) the switching means 61 are in the ON position and thus close the power supply circuit from the batteries to the circuitry of the closing device. When the bung is upturned (Figure 2) the switching means 61, through the force of gravity, move into the OFF position and thus interrupt the power supply circuit from the batteries to the circuitry of the closing device, allowing saving of the batteries.

The closing device 100 can also comprise a set of optional sensors, such as temperature sensors, pH sensors and others monitoring the main parameters of the wine. These sensors can preferably be disposed in the lower surface of the covering sheath 20 of the closing device so as to protrude downward therefrom into the barrique to check the wine contained therein.

Alternatively, the sensors or other parts listed above can be installed directly in the barrique.

Operation of the closing device according to the invention is described hereunder.

By means of the locking system, the closure device 100 is inserted in the input hole of the barrique and blocked therein by rotation of the threaded ring nut 13 with acts on the upper part 22 of the covering sheath, forcing it against the profile of the hole of the barrique. The upper part 22 of the covering sheath, made of elastic material, thus allows a perfect sealing of the closing device 100 to the barrique, minimising the oxygen transfer through the wood-bung interface.

Once the bung 100 has been fixed tightly, the ring 40 with the level sensor 41 continuously monitors the level of the wine present in the barrique. So long as the level of wine inside the barrel is greater than the minimum threshold level, the control logic of the circuit board 50 keeps the green led 52G powered, indicating that there is no need for topping up. When the wine falls below the minimum threshold level, the ring 40 containing the level sensor 41 reaches a minimum position and accordingly sends a command signal to the control logic of the circuit board 50 which switches off the green LED 52G and switches on the red LED 52R.

The pressure relief valve 32 allows the excess pressure created by any phenomena of fermentation of the wine to be released.

If the bung 100 is not used - for example when decanting the wine or cleaning the barrels - and it is positioned in the upturned position shown in Figure 2, the gravity switch 60 interrupts the electrical power supply from the batteries 52 to the control logic of the circuit board 50, thus ensuring a longer life of said batteries.

In the present description the closing device 100 has been designed to be applied to the hole of the barrel that serves for filling and topping up the wine. However, said topping up hole can be closed by a standard barrel bung and in his case the closing device 100 can be applied to another hole created specially in the barrel.

Numerous changes and modifications of detail within the reach of a person skilled in the art can be made to the present invention without thereby departing from the scope of the invention as set forth in the appended claims.

## Claims

1. A device (100) for the closure of barrels, comprising a body (1) suitable to be inserted into the hole of a barrel and a head (10) accessible from outside of the barrel hole, **characterised in that** it further comprises:
- detector means (41) suitable to detect physical quantities relating to the wine contained in the barrel, and
- signalling means (52) operatively connected to said detector means (41), suitable to provide the user with a signal relating to said physical quantities detected by said detector means (41).

2. A device (100) according to claim 1, **characterised in that** said detector means comprise a level sensor (41) suitable to detect the level of the wine contained in the barrel.

3. A device (100) according to claim 2, **characterised in that** said level sensor comprises a magnetic sensor (41) integrated in a float (40) slidingly mounted on the body (1) of said closing device (100).

4. A device (100) according to claim 2 or 3, **characterised in that** said signalling means comprise at least one light source (52) suitable to provide a light signal when the wine level detected by said level sensor (41) inside the barrel falls beneath a pre-set minimum threshold level.

5. A device (100) according to claim 4, **characterised in that** said at least one light source comprises:
- a green light emitting diode (LED; 52G) which remains lighted when the detected wine level is greater than the pre-set minimum threshold level and is switched off when the detected wine level is below the pre-set minimum threshold level, and
- a red light emitting diode (LED; 52R) which remains lighted when the detected wine level is below the pre-set minimum threshold level and is switched off when the detected wine level is greater than the pre-set minimum threshold level.

6. A device (100) according to any one of the preceding claims, **characterised in that** it comprises a printed circuit board (50) wherein a control logic suitable to control the operation of said detector means (41) and of said signalling means (52) is integrated.

7. A device (100) according to any one of the preceding claims, **characterised in that** it comprises electrical power supply means (53) suitable to power supply the circuitry provided in said closing device.

8. A device (100) according to claim 7, **characterised in that** said electrical power supply means comprise at least one AA battery (53).

9. A device (100) according to claim 7 or 8, **characterised in that** said signalling means further comprise a yellow LED (52Y) which lights when said electrical power supply means (53) are almost down.

10. A device (100) according to claim 8 or 9, **characterised in that** said LEDs (52) and said AA batteries (53) are mounted on a printed circuit base plate (51) disposed in the head (10) of said closing device and connected to said circuit board (50) containing the control logic which is disposed axially inside the body (1) of the closing device and **in that** a transparent cover (6) is removably mounted on the head (10) of the closing device.

11. A device (100) according to any one of claims 7 to 10, **characterised in that** it comprises a switch (60) suitable to switch on/off the power supply from said electrical power supply means (53) to the circuitry of the closing device.

12. A device (100) according to claim 13 (11; Translator's note), **characterised in that** said switch is a gravity switch (60) comprising switching means (61) sliding by gravity to switch into the ON/OFF positions.

13. A device (100) according to any one of the preceding claims, **characterised in that** said detector means comprise temperature sensors and/or pH sensors.

14. A device (100) according to any one of the preceding claims, **characterised in that** said body (1) is covered with a covering sheath (20) of elastomeric material.

15. A device (100) according to claim 14, **characterised in that** it comprises a threaded ring nut (13) which screws into said body (1), said ring nut (13) comprising a frusto conical body (14) which is at least partially positioned between said body (1) and the upper part (22) of said covering sheath, so that by screwing the ring nut an advancement of the body (14) of the ring nut on the body (1) of the closing device is caused and thus a widening of the upper part (22) of the covering sheath which exerts a pressure and a tight sealing on the profile of the barrel hole.

16. A device (100) according to any one of the preceding claims, **characterised in that** said device (100) is disposed in a hole of the barrel different from the hole for topping up the wine inside the barrel.
